# EUROPEAN PATENT APPLICATION

(11) **EP 3 567 507 A1**
(43) Date of publication of application: **13.11.2019**
(21) Application number: 18892200.9
(22) Date of filing: 15.10.2018
(51) Int. Cl.: G06F 21/62, G06F 12/00

(54) **DATA MANAGEMENT SYSTEM**

(30) Priority: 20.12.2017 JP 2017244135
(71) Applicant: iSplit Co., Ltd., Chiyoda-ku Tokyo 1010051 (JP)
(72) Inventor: MIZUNO, Minoru, Tokyo 1010051 (JP)
(74) Representative: Mewburn Ellis LLP
(86) International application number: PCT/JP2018/038357
(87) International publication number: WO 2019/123798

(57) **Abstract**

A data management system 1 includes a client apparatus 100, a window server apparatus 200 and a plurality of data server apparatuses 501, 502 and 503. The client apparatus 100 is configured to transform private information including a character string having at least one item into a character code. The client apparatus 100 is configured to divide the character code into at least two divisional character code portions. The client apparatus 100 is configured to transmit the divisional character code portions to the window server apparatus 200. The window server apparatus 200 is configured to store first data, which is formed by a part of the divisional character code portions, in one data server apparatus of the plurality of data server apparatuses 501, 502 and 503 and store second data, which is formed by a part of the divisional character code portions that is different from the part forming the first data, in another data server apparatus of the plurality of data server apparatuses 501, 502 and 503.

## Description

### Technical Field

The present invention relates to a data management system for protecting private information.

### Background Art

In recent years, there has been a growing concern about leakage of private information due to unauthorized access or the like. It is therefore essential for an enterprise or the like that handles vast amount of private information to take measures against leakage of private information. As a technique of detecting an unauthorized access, Patent Literature 1 discloses a method in which an unauthorized access detection server receives a packet destined to an information processing server storing private information or the like transmitted from an information processing terminal, analyzes information in the received packet to detect whether the packet is intended for illegal purposes, attaches a mark indicating an illegal packet to any detected illegal packet, and transmits the packet to an information processing server having a capability of recognizing the mark, and the information processing server having received any illegal packet with the mark attached thereto transmits false information to the information processing terminal having transmitted the illegal packet or otherwise performs a process of preventing an unauthorized access.

### Citation List

### Patent Literature

Patent Literature 1: JP-A-2002-7234

### Summary of Invention

### Technical Problem

According to the method described in Patent Literature 1, an intruder with the intention of unauthorized access is deliberately allowed to access a plurality of times, and information about the unauthorized access (such as the target of the access, the address of the intruder, or the procedure of the access) is collected in the meantime. Therefore, the first unauthorized access may fail to be detected.

In view of the above problem, an object of the present invention is to provide a data management system that does not detect an unauthorized access but can make any private information leaked by unauthorized access useless to the unauthorized access user.

### Solution to Problem

The present invention provides a data management system comprising a client apparatus, a window server apparatus and a plurality of data server apparatuses. In order to solve the problem described above, the client apparatus is configured to transform private information including a character string having at least one item into a character code, the client apparatus is configured to divide the character code into at least two divisional character code portions, the client apparatus is configured to transmit the divisional character code portions to the window server apparatus, and the window server apparatus is configured to store first data, which is formed by a part of the divisional character code portions, in one data server apparatus of the plurality of data server apparatuses and store second data, which is formed by a part of the divisional character code portions that is different from the part forming the first data, in another data server apparatus of the plurality of data server apparatuses.

In the data management system according to the present invention, preferably, the client apparatus is configured to divide the character code into at least three divisional character code portions, and the window server apparatus is configured to store first data, which is formed by a part of the divisional character code portions, and second data, which is formed by a part of the divisional character code portions that is different from the part forming the first data, and third data, which is formed by a part of the divisional character code portions that is different from the parts forming the first and second data, in two or more data server apparatuses of the plurality of data server apparatuses in an overlapping manner.

In the data management system according to the present invention, preferably, the client apparatus is configured to directly couple divisional character code portions of the same ordinal number from the head of character codes to each other in the order of the character strings as original data and then transmit the coupled divisional character code portions to the window server apparatus.

In the data management system according to the present invention, preferably, the plurality of data server apparatuses are located at different geological locations.

Table 1 shows definitions of terms used in the present invention.

**[Table 1]**

| | |
|---|---|
| Private information | Information that includes an item, such as name, address, telephone number, e-mail address or birth date, and is transformed into a character code according to the present invention |
| User | An organization, such as a school, an enterprise or a government office, or a staff member thereof that uses a data management system according to the present invention to manage private information about a plurality of persons |
| User information | Username, authorization, access cipher key, account, password or the like |
| Authentication information | Access cipher key, server IP, port number or the like |
| Access cipher key | a key required for authentication between server apparatuses |

### Brief Description of the Drawings

Figure 1 is a diagram showing a configuration of a data management system according to a first embodiment of the present invention.
Figure 2 is a diagram for illustrating an example of a process of storing private information in the data management system.
Figure 3 is a diagram for illustrating the example of the process of storing private information in the data management system.
Figure 4 is a diagram for illustrating another example of the process of storing private information in the data management system.
Figure 5 is a diagram for illustrating the other example of the process of storing private information in the data management system.
Figure 6 is a diagram showing a configuration of a data management system according to a second embodiment of the present invention.
Figure 7 is a flowchart showing registration of user information.
Figure 8 is a flowchart showing reference to and update and deletion of user information.
Figure 9 is a flowchart showing a process of availability check.
Figure 10 is a flowchart showing management of data server apparatuses.
Figure 11 is a flowchart showing a process of registration of two divisional data portions.
Figure 12 is a flowchart showing a process of registration of three divisional data portions.
Figure 13 is a flowchart showing a process of dividing a character code into two portions.
Figure 14 is a flowchart showing a process of dividing a character code into three portions.
Figure 15 is a flowchart showing a process of coupling two divisional character code portions.
Figure 16 is a flowchart showing a process of coupling three divisional character code portions.

### Description of Embodiments

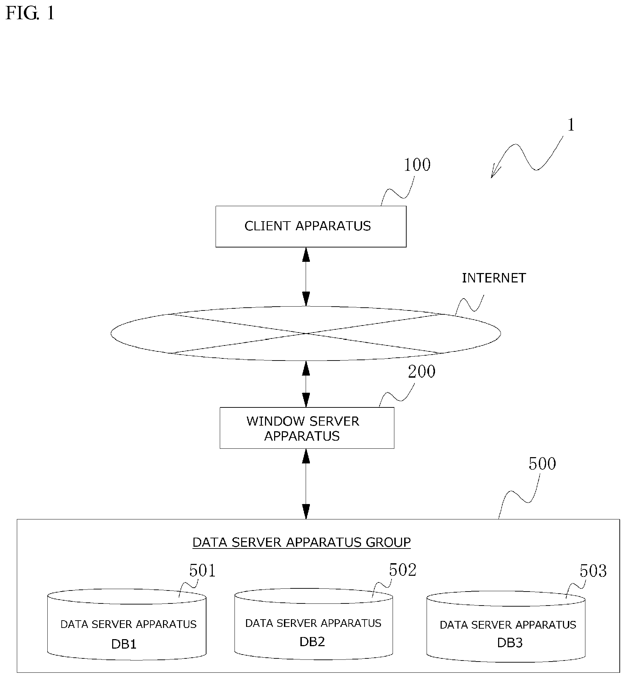

Figure 1 is a diagram showing a configuration of a data management system 1 for protecting private information, such as name and address, according to a first embodiment of the present invention.

The data management system 1 includes a client apparatus 100, a window server apparatus 200, and a data server apparatus group 500 including a plurality of data server apparatuses 501, 502, 503 and so on. The client apparatus 100 and the window server apparatus 200 are connected to each other via the Internet. Although the window server apparatus 200 and the data server apparatus group 500 are connected by a dedicated line in the illustrated example, the window server apparatus 200 and the data server apparatus group 500 may also be connected to each other via the Internet.

The client apparatus 100, the window server apparatus 200 and the data server apparatuses 501, 502 and 503 may be constituted by a personal computer (PC) or the like and have a hardware configuration (including a CPU, a memory, a hard disk, an input / output device and the like) of a common information processing apparatus.

The client apparatus 100 is a computer apparatus used by a user (an organization, such as a school, an enterprise or a government office, and a staff member thereof that use the data management system 1 according to the present invention for managing multiple private information about a plurality of persons).

The window server apparatus 200 is a server apparatus that performs authentication of and processes a request from the client apparatus 100.

The data server apparatuses 501, 502 and 503 are server apparatuses that store a character code portion resulting from division of a character code transformed from private information or the like formed by a character string as described in detail later. The data server apparatuses are preferably located at different geological locations.

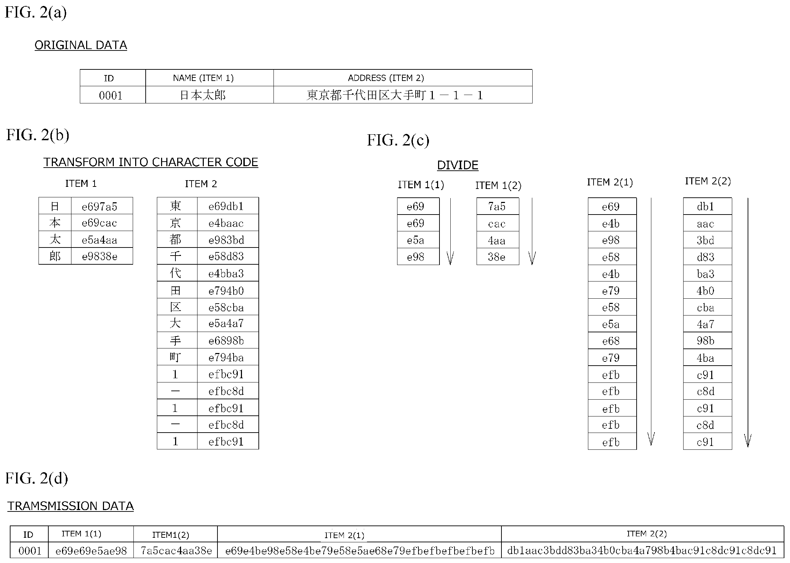

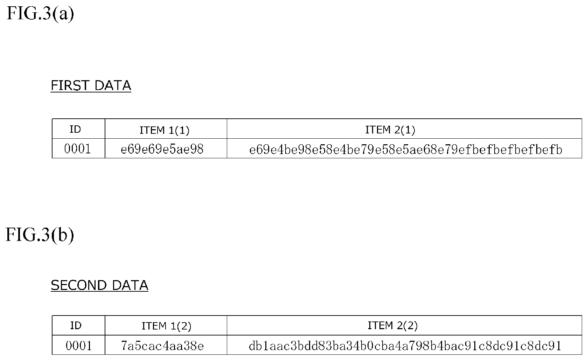

With reference to Figures 2 and 3, an example of a process of storing private information in the data management system 1 will be described. Figure 2 shows a procedure in the client apparatus 100, and Figure 3 shows a procedure in the window server apparatus 200.

As shown in Figure 2(a), the user of the client apparatus 100 may store private information consisting of a character string containing two items, name and address, along with an ID (which is the same as an access cipher key in the second embodiment described later) associated with the private information as original data in the data management system 1. Of the private information, the name, which is an item 1, is " 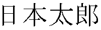 (Taro Nihon)", and the address, which is an item 2, is " 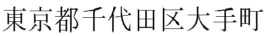 1-1-1(1-1-1 Otemachi Chiyoda-ku, Tokyo)". An ID "0001" is issued and transmitted to the client apparatus 100 in advance by the window server apparatus 200. Note that the user is an enterprise or the like that uses the data management system 1 according to the present invention as described above, and the user itself is not named "Taro Nihon".

As shown in Figure 2(b), the client apparatus 100 transforms the name and address of the private information consisting of a character string into character codes. For example, " 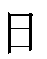 " is transformed into "e697a5" in UTF-8. Although UTF-8 is used in the illustrated example, any character code, such as UTF-16 code, JIS code or SJIS code, may be used.

As shown in Figure 2(c), the client apparatus 100 divides each character code of the item 1 and each character code of the item 2 into a number of character code portions (divisional character code portions) (the items 1 and 2 are divided into two items 1(1) and 1(2) and two items 2(1) and 2(2), respectively, in the illustrated example), the number of the character code portions being any number equal to or greater than two and equal to or smaller than a maximum division number described later. The maximum division number is the number of the code elements forming the character code (i.e., the number of digits). For example, in the above example, the character code "e697a5" is formed by six code elements "e", "6", "9", "7", "a" and "5", and therefore the maximum division number is six. The client apparatus 100 then couples the divisional character code portions of the same ordinal number from the head of the character codes directly to each other in the order of the character codes in the character string as the original data (in the order indicated by arrows in the drawing) (in the case where each character code is divided into two character code portions, the first-half divisional character code portions are coupled to each other, and the second-half divisional character code portions are coupled to each other).

As shown in Figure 2(d), the client apparatus 100 transmits the ID and the coupled character code portions (items 1(1), 1(2), 2(1) and 2(2)) formed by the divisional character code portions to the window server apparatus 200 as transmission data.

Upon receiving the ID and the coupled divisional character code portions from the client apparatus 100, the window server apparatus 200 produces first data from the ID, the first half (item 1(1)) of the character code of the item 1 and the first half (item 2(1)) of the character code of the item 2 as shown in Figure 3(a), and produces second data from the ID, the second half (item 1(2)) of the character code of the item 1 and the second half (item 2(2)) of the character code of the item 2 as shown in Figure 3(b).

The window server apparatus 200 then stores the first data shown in Figure 3(a) in one of the plurality of data server apparatuses 501, 502 and 503, for example, the data server apparatus 501, and stores the second data shown in Figure 3(b) in one of the plurality of data server apparatuses 501, 502 and 503, for example, the data server apparatus 502.

As a result, even if the first data stored in the data server apparatus 501 leaks, the private data " 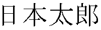 " and " 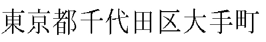 1-1-1" cannot be reconstructed from the leaked first data. In this way, the data management system 1 according to the present invention can make the leaked data useless to the unauthorized access user.

Preferably, the client apparatus 100 then deletes the original data and the transmission data, and the window server apparatus 200 deletes the first data and the second data.

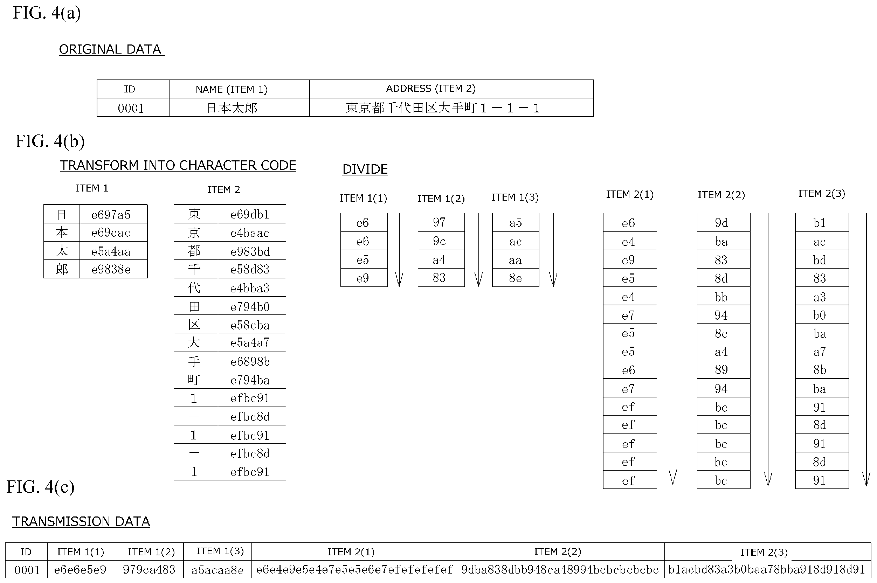

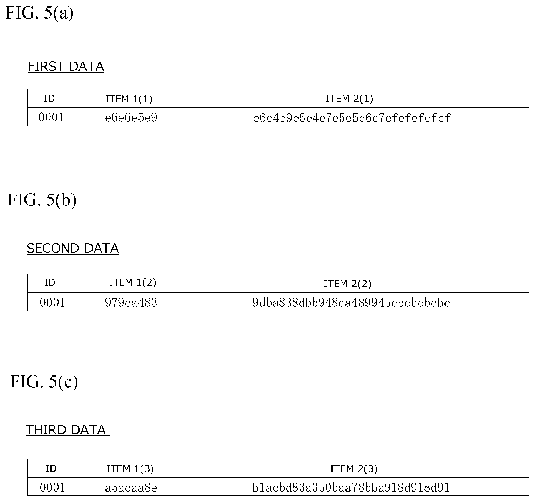

With reference to Figures 4 and 5, another example of the process of storing private information in the data management system 1 will be described. While the data is divided into two portions in Figures 2 and 3, the data is divided into three portions in Figures 4 and 5. Figure 4 shows a procedure in the client apparatus 100, and Figure 5 shows a procedure in the window server apparatus 200.

Figure 4(a) is the same as Figure 2(a), and Figure 4(b) is the same as Figure 2(b). Therefore, these drawings will not be further described.

As shown in Figure 4(c), the client apparatus 100 divides each character code of the item 1 and each character code of the item 2 into three portions. The client apparatus 100 then directly couples the first divisional character code portions to each other, the second divisional character code portions to each other, and the third divisional character code portions to each other in the order of the character codes in the character string as the original data, as shown in Figure 4(d).

The client apparatus 100 transmits the ID and the divided character codes (divided character codes of the items 1 and 2) to the window server apparatus 200 as transmission data as shown in Figure 4(d).

Upon receiving the ID and the divided character codes from the client apparatus 100, the window server apparatus 200 produces first data from the ID, the first portion (item 1(1)) of the character code of the item 1 and the first portion (item 2(1)) of the character code of the item 2 as shown in Figure 5(a), produces second data from the ID, the second portion (item 1(2)) of the character code of the item 1 and the second portion (item 2(2)) of the character code of the item 2 as shown in Figure 5(b), and produces third data from the ID, the third portion (item 1(3)) of the character code of the item 1 and the third portion (item 2(3)) of the character code of the item 2 as shown in Figure 5(c).

The window server apparatus 200 then stores the first data shown in Figure 5(a) in one of the plurality of data server apparatuses 501, 502 and 503, for example, the data server apparatus 501, stores the second data shown in Figure 5(b) in one of the plurality of data server apparatuses 501, 502 and 503, for example, the data server apparatus 502, and stores the third data shown in Figure 5(c) in one of the plurality of data server apparatuses 501, 502 and 503, for example, the data server apparatus 503.

In the above example where the first data is stored in the data server apparatus 501, the second data is stored in the data server apparatus 502, and the third data is stored in the data server apparatus 503, the data is stored in the data server apparatuses 501, 502 and 503 in a non-overlapping manner.

Alternatively, the data may be stored in the data server apparatuses 501, 502 and 503 in an overlapping manner.

For example, the window server apparatus 200 may store the first data shown in Figure 5(a) in two of the plurality of data server apparatuses 501, 502 and 503, for example, the data server apparatuses 501 and 502. Similarly, the window server apparatus 200 may store the second data shown in Figure 5(a) in the data server apparatuses 502 and 503, and store the third data shown in Figure 5(c) in the data server apparatuses 501 and 503.

In this example, the first data is stored in the data server apparatuses 501 and 502 in an overlapping manner, the second data is stored in the data server apparatuses 502 and 503 in an overlapping manner, and the third data is stored in the data server apparatuses 501 and 503 in an overlapping manner. In this case, even if the data server apparatus 501 fails or is broken so that data cannot be retrieved from the data server apparatus 501, required data can be retrieved from the remaining data server apparatuses 502 and 503.

Furthermore, the first data stored in the data server apparatus 501 and the first data stored in the data server apparatus 502 can be checked against each other to detect any tampering with any of the data by an unauthorized access user.

The present invention is not limited to the embodiment described above, and various modifications can be made.

For example, while examples in which data is divided into two or three portions have been described with regard to the embodiment described above, data can be divided into any number of portions.

While the private information contains two items, name and address, in the embodiment described above, the private information may further contain any item, such as telephone number, e-mail address or birth date.

While the data server apparatus group 500 includes three data server apparatuses 501, 502 and 503 in the embodiment described above, the number of the data server apparatuses included in the data server apparatus group 500 may be any number equal to or greater than two.

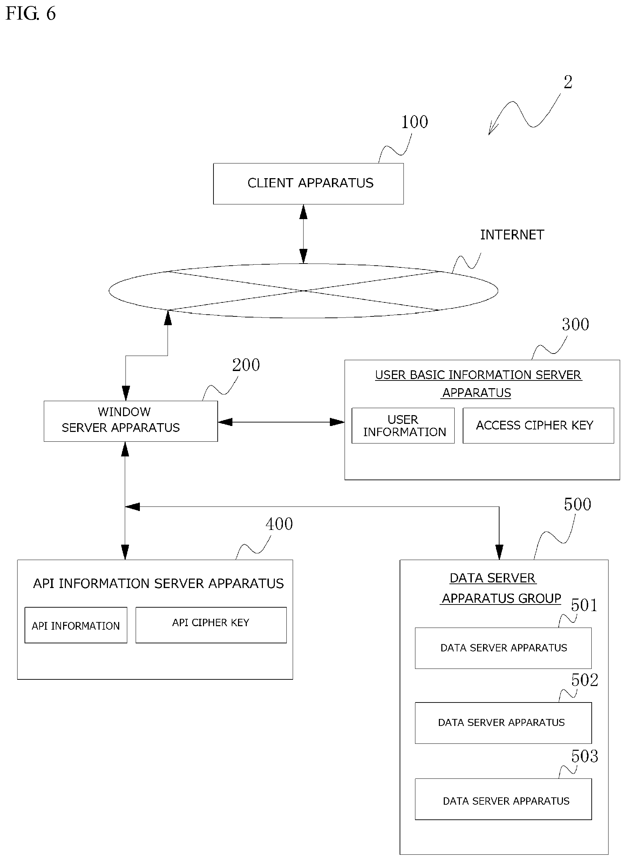

Figure 6 is a diagram showing a configuration of a data management system 2 according to a second embodiment of the present invention.

The data management system 2 according to the second embodiment is the data management system 1 according to the first embodiment additionally provided with a user basic information server apparatus 300 and an API information server apparatus 400.

The user basic information server apparatus 300 is a server apparatus that manages user information (such as username, authorization, access cipher key, account or password) and authentication information (such as access cipher key, server IP or port number) concerning each server used.

The API information server apparatus 400 is a server apparatus that stores API information and an API cipher key.

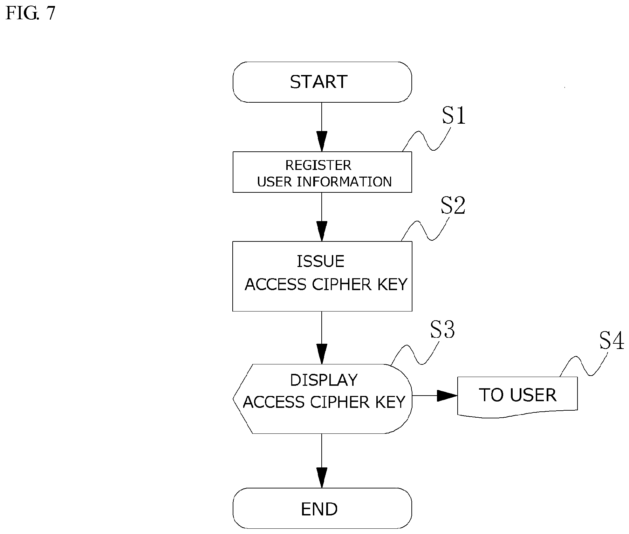

With reference to the flowcharts of Figures 7 to 16, operations of the data management system 2 according to the second embodiment of the present invention will be described.

Figure 7 is a flowchart showing registration of user information.

In Step S1, a user registers user information (such as account and password) with the window server apparatus 200 on the client apparatus 100. The window server apparatus 200 transmits the user information received from the client apparatus 100 to the user basic information server apparatus 300.

In Step S2, the user basic information server apparatus 300 issues an access cipher key (such as an eight-digit number "12345678") based on the user information, and transmits the access cipher key to the window server apparatus 200.

The window server apparatus 200 displays (or prints) the received access cipher key in Step S3, thereby informing the user of the client apparatus 100 of the access cipher key in Step S4.

The access cipher key is a key required for authentication between server apparatuses. The access cipher key is used for data exchange between the client apparatus 100 and the window server apparatus 200 and between the window server apparatus 200 and the user basic information server apparatus 300.

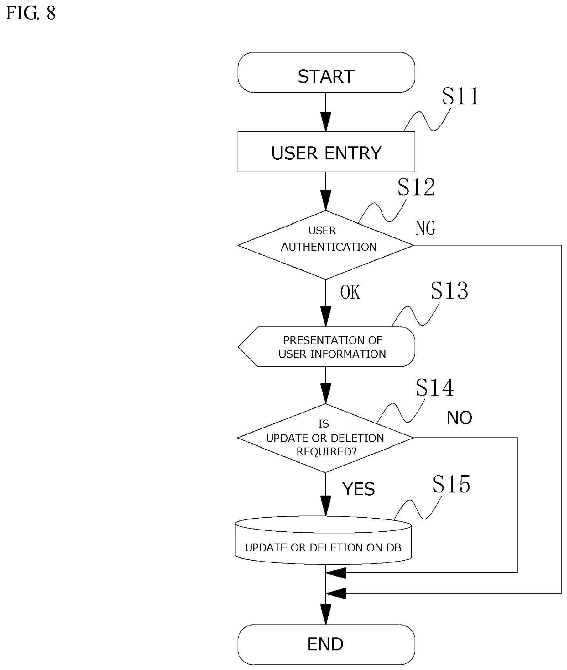

Figure 8 is a flowchart showing reference to and update and deletion of user information.

In Step S11, the user enters the user's account and password on the client apparatus 100.

In Step S12, the window server apparatus 200 transmits the entered account and password to the user basic information server apparatus 300, and the user basic information server apparatus 300 performs user authentication based on the account and password.

If the user authentication has succeeded, in Step S13, the user basic information server apparatus 300 transmits the user information (such as user name, authorization, access cipher key, account or password) to the window server apparatus 200, and the window server apparatus 200 presents the user information to the client apparatus 100.

In Step S14, the window server apparatus 200 determines whether any update or deletion on new user information entered in and transmitted from the client apparatus 100 by the user is required or not.

If such an update or deletion is required, in Step S15, the window server apparatus 200 transmits the new user information received from the client apparatus 100 to the user basic information server apparatus 300, and the user basic information server apparatus 300 performs an update or deletion on a database DB of the user basic information server apparatus 300.

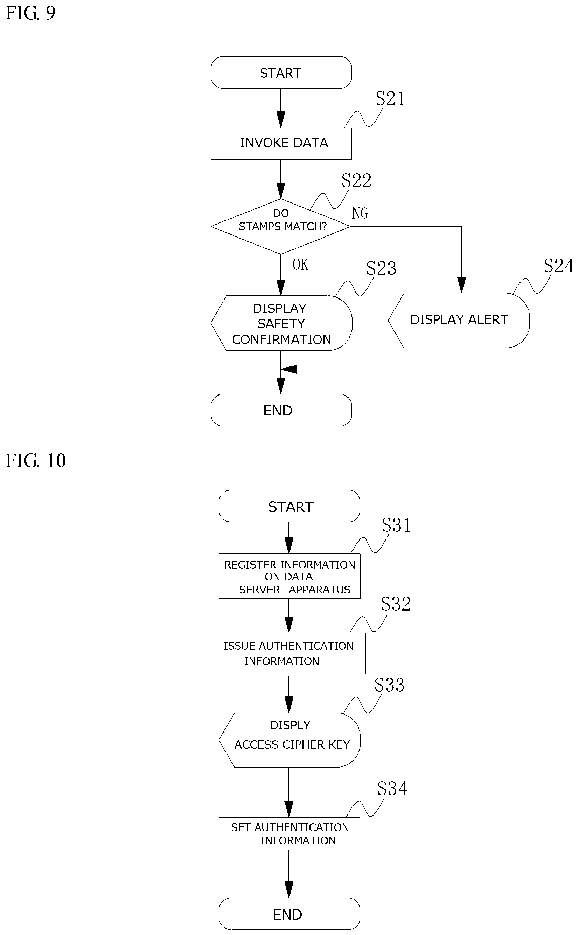

Figure 9 is a flowchart showing a process of availability check.

In Step S21, the window server apparatus 200 receives (or invokes) the portions of data from the data server apparatus group 500. In the example shown in Figure 5, the window server apparatus 200 receives the portion "e6e6e5e9" from the data server apparatus 501, the portion "979ca483" from the data server apparatus 502 and the portion "a5acaa8e" from the data server apparatus 503.

In Step S22, the window server apparatus 200 checks timestamps on the portions of data against each other. In other words, the window server apparatus 200 verifies whether the timestamps on the portions "e6e6e5e9", "979ca483" and "a5acaa8e" match each other or not.

If the result of the timestamp check is affirmative, in Step S23, the window server apparatus 200 informs the client apparatus 100 that safety has been confirmed. The window server apparatus 200 then reconstructs the data and transmits the reconstructed data to the client apparatus 100. For example, the window server apparatus 200 transmits data "e6e6e5e9979ca483a5acaa8e" to the client apparatus. The data "e6e6e5e9979ca483a5acaa8e" represents " 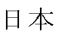 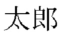 " as shown in Figure 4(d).

If the result of the timestamp check is negative, in Step S24, the window server apparatus 200 provide an alert to the client apparatus 100.

Figure 10 is a flowchart showing the management of data server apparatuses.

In Step S31, information (such as IP address and port) on the data server apparatuses 501, 502 and 503 for storing data is registered with the window server apparatus 200, and the window server apparatus 200 stores the information.

In Step S32, the window server apparatus 200 issues authentication information (for example access cipher key) and transmits the authentication information to the user basic information server apparatus 300.

In Step S33, the window server apparatus 200 presents the authentication information (for example access cipher key) to the client apparatus 100.

In Step S34, the window server apparatus 200 sets the authentication information in an application in the window server apparatus 200.

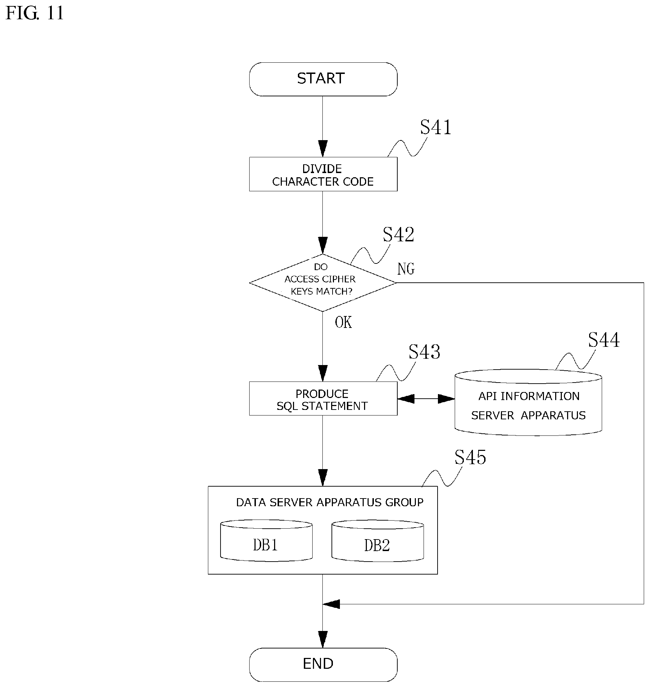

Figure 11 is a flowchart showing a process of registration of two divisional data portions.

In Step S41, the client apparatus 100 divides a character code into two portions, and transmits the access cipher key and the divisional character code portions to the window server apparatus 200. For example, the client apparatus 100 transmits the first and second data shown in Figure 3 and the access cipher key "12345678" to the window server apparatus 200. The client apparatus further transmits an API cipher key and an API name to the window server apparatus.

The window server apparatus 200 derives the API cipher key, the API name and a parameter from the information transmitted from the client apparatus 100. In this example, parameters used for registration of " 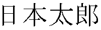 " are the divisional character code portions, for example, "e69e69e5ae98" and "7a5cac4aa38e".

In Step S42, the window server apparatus 200 performs access authentication by checking the access cipher key transmitted from the client apparatus 100 against the access cipher key stored in the user basic information server apparatus 300.

If the result of the check of the access cipher key is affirmative, in Steps S43 and S44, the window server apparatus 200 deciphers the parameters transmitted from the client apparatus 100 with an API key stored in the API information server apparatus 400, and then combines the API number and the parameters into an SQL statement.

In Step S45, the window server apparatus 200 transmits the combined SQL statement to two data server apparatuses 501 and 502 (DB1 and DB2) of the data server apparatus group 500, and the data server apparatuses 501 and 502 (DB1 and DB2) store the SQL statement. For example, the window server apparatus 200 transmits the first data shown in Figure 3(a) to the data server apparatus 501 (DB1) and transmits the second data shown in Figure 3(b) to the data server apparatus 502 (DB2), the data server apparatus 501 (DB1) stores the first data, and the data server apparatus 502 (DB2) stores the second data.

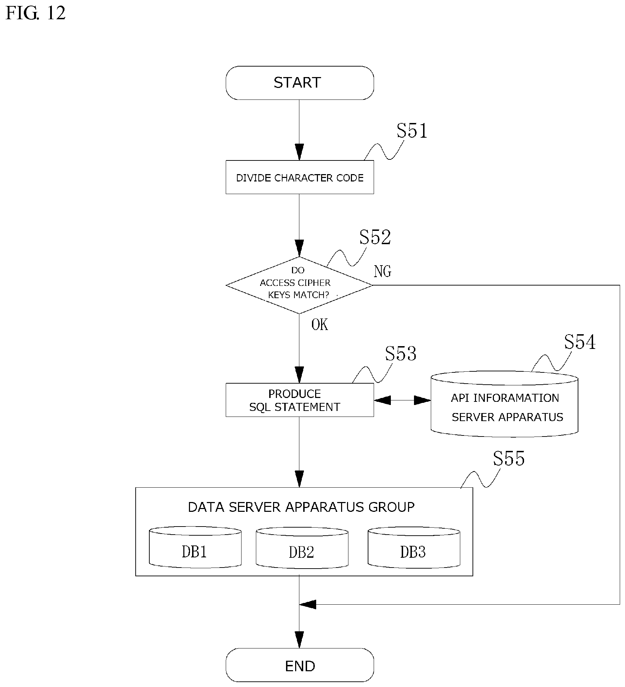

Figure 12 is a flowchart showing a process of registration of three divisional data portions.

In Step S51, the client apparatus 100 divides a character code into three portions, and transmits the access cipher key and the divisional character code portions to the window server apparatus 200. For example, the client apparatus 100 transmits the first to third data shown in Figure 5 and the access cipher key "12345678" to the window server apparatus 200. The client apparatus further transmits an API cipher key and an API name to the window server apparatus.

The window server apparatus 200 derives the API cipher key, the API name and a parameter from the information transmitted from the client apparatus 100. In this example, parameters used for registration of " 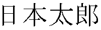 " are the divisional character code portions, for example, "e6e6e5e9", "979ca483" and "a5acaa8e".

In Step S52, the window server apparatus 200 performs access authentication by checking the access cipher key transmitted from the client apparatus 100 against the access cipher key stored in the user basic information server apparatus 300.

If the result of the check of the access cipher key is affirmative, in Steps S53 and S54, the window server apparatus 200 deciphers the parameters transmitted from the client apparatus 100 with an API key stored in the API information server apparatus 400, and then combines the API number and the parameters into an SQL statement.

In Step S55, the window server apparatus 200 transmits the combined SQL statement to three data server apparatuses 501, 502 and 503 (DB1, DB2 and DB3) of the data server apparatus group 500, and the data server apparatuses 501, 502 and 503 (DB1, DB2 and DB3) store the SQL statement. For example, the window server apparatus 200 transmits the first data shown in Figure 5(a) to the data server apparatus 501 (DB1), transmits the second data shown in Figure 5(b) to the data server apparatus 502 (DB2) and transmits the third data shown in Figure 5(c) to the data server apparatus 503 (DB3), the data server apparatus 501 (DB1) stores the first data, the data server apparatus 502 (DB2) stores the second data, and the data server apparatus 503 (DB3) stores the third data.

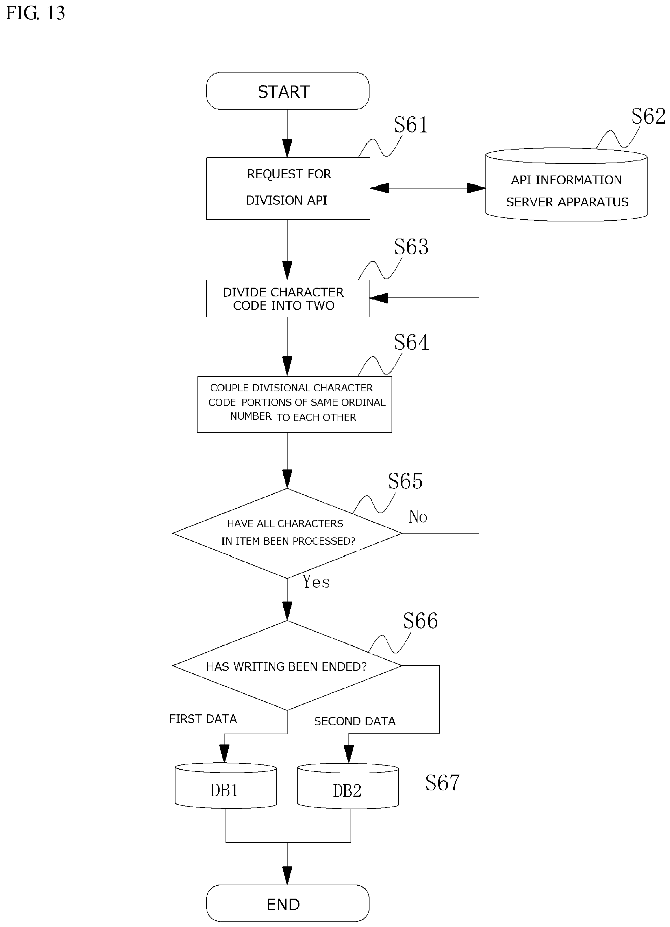

Figure 13 is a flowchart showing a process of dividing a character code into two portions.

In Steps S61 and S62, the window server apparatus receives a data division API from the API information server apparatus 400.

In Step S63, the client apparatus 100 divides each character code into two portions, and transmits the access cipher key and the divisional character code portions to the window server apparatus 200. For example, the client apparatus 100 transmits the first and second data shown in Figure 3 and the access cipher key "12345678" to the window server apparatus 200.

In Step S64, the window server apparatus 200 couples the divisional character code portions of the same ordinal number to each other in the order of the character codes in the character string as the original data (that is, the first-half divisional character code portions are coupled to each other, and the second-half divisional character code portions are coupled to each other).

In Step S65, the window server apparatus 200 activates an insertion transaction for the data server apparatuses 501 and 502 (DB1 and DB2) and monitors whether a temporary insertion processing for each of the DB1 and DB2 has been completed.

If the insertion processing for each of the DB1 and DB2 is completed, in Step S66, the window server apparatus 200 transmits a transaction end command to each of the DB1 and DB2.

In Step S67, the window server apparatus 200 performs a storage processing for each of the DB1 and DB2 and maintains data consistency. For example, the window server apparatus 200 stores the first data shown in Figure 3(a) in the data server apparatus 501 (DB1) and stores the second data shown in Figure 3(b) in the data server apparatus 502 (DB2).

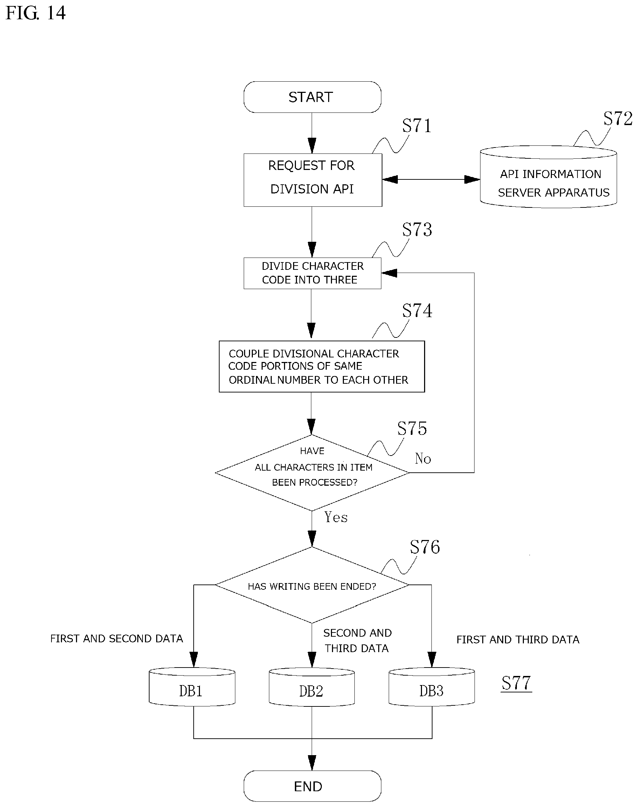

Figure 14 is a flowchart showing a process of dividing a character code into three portions.

In Steps S71 and S72, the window server apparatus receives a data division API from the API information server apparatus 400.

In Step S73, the client apparatus 100 divides each character code into three portions, and transmits the access cipher key and the divisional character code portions to the window server apparatus 200. For example, the client apparatus 100 transmits the first to third data shown in Figure 5 and the access cipher key "12345678" to the window server apparatus 200.

In Step S74, the window server apparatus 200 couples the divisional character code portions of the same ordinal number from the head of the character codes to each other in the order of the character codes in the character string as the original data (that is, the first divisional character code portions are coupled to each other, the second divisional character code portions are coupled to each other, and the third divisional character code portions are coupled to each other).

In Step S75, the window server apparatus 200 activates an insertion transaction for the data server apparatuses 501, 502 and 503 (DB1, DB2 and DB3) and monitors whether a temporary insertion processing for each DB has been completed.

If the insertion processing for each DB is completed, in Step S76, the window server apparatus 200 transmits a transaction end command to each DB.

In Step S77, the window server apparatus 200 performs a storage processing for each DB and maintains data consistency. For example, the window server apparatus 200 stores the first data shown in Figure 5(a) and the second data shown in Figure 5(b) in the data server apparatus 501 (DB1), stores the second data shown in Figure 5(b) and the third data shown in Figure 5(c) in the data server apparatus 502 (DB2) and stores the first data shown in Figure 5(a) and the third data shown in Figure 5(c) in the data server apparatus 503 (DB3).

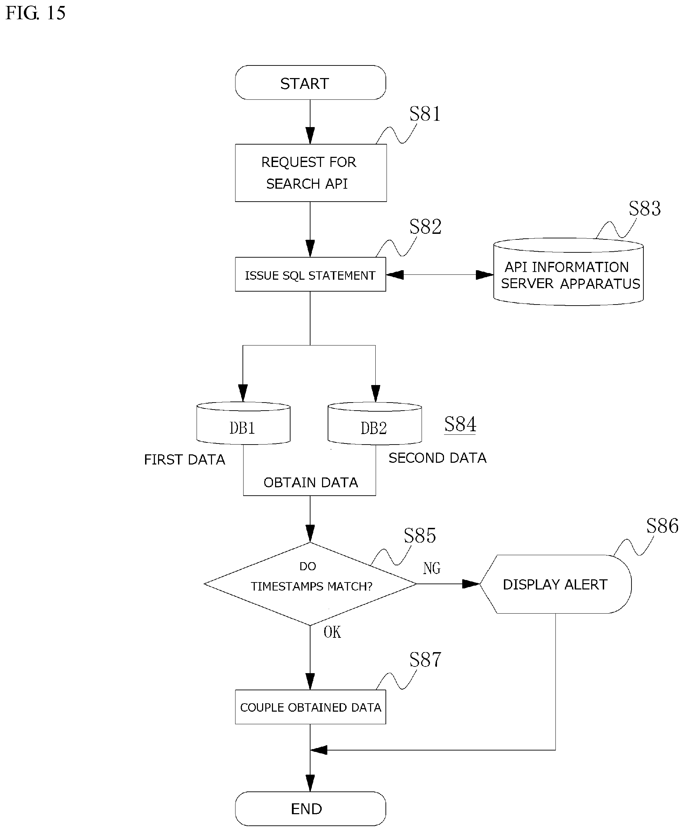

Figure 15 is a flowchart showing a process of reconstructing original data by coupling two divisional character code portions.

In Step S81, the client apparatus 100 invokes a search API in the window server apparatus 200.

In Steps S82 and S83, the window server apparatus 200 issues an SQL statement by cutting parameters received from the client apparatus 100 and combining search logics stored in the API information server apparatus 400.

In Step S84, the window server apparatus 200 performs a data extraction processing from the data server apparatuses 501 and 502 (DB1 and DB2) based on the SQL statement.

In Step S85, the window server apparatus checks timestamps on data obtained from the data server apparatuses 501 and 502 (DB1 and DB2). For example, the window server apparatus 200 obtains the first data shown in Figure 3(a) from the data server apparatus 501 (DB1) and the second data shown in Figure 3(b) from the data server apparatus 502 (DB2) and checks the timestamps on the data.

If the timestamps do not match each other, in Step S86, the window server apparatus 200 provides an alert to the client apparatus 100.

If the timestamps match each other, in Step S87, the window server apparatus 200 reconstructs the original data by coupling the data obtained from the data server apparatuses 501 and 502 (DB1 and DB2). For example, this processing involves decomposing the item 1(1) of the first data shown in Figure 3 back into divisional data portions, decomposing the item 1(2) of the second data back into divisional data portions, and coupling the decomposed divisional data portions to each other back into the original character data. The same processing is performed for the item 2.

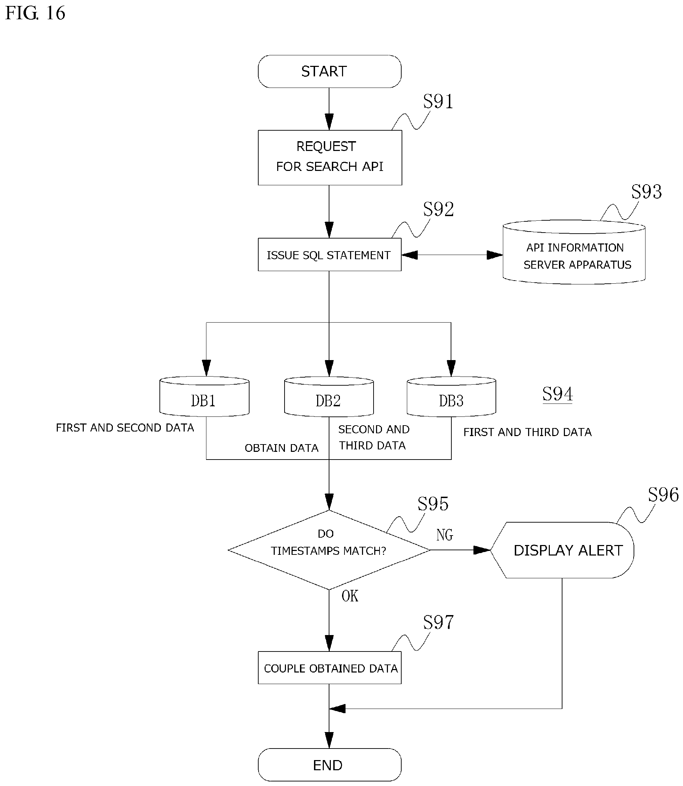

Figure 16 is a flowchart showing a process of reconstructing original data by coupling three divisional character code portions.

In Step S91, the client apparatus 100 invokes a search API in the window server apparatus 200.

In Steps S92 and S93, the window server apparatus 200 issues an SQL statement by cutting parameters received from the client apparatus 100 and combining search logics stored in the API information server apparatus 400.

In Step S94, the window server apparatus 200 performs a data extraction processing from the data server apparatuses 501, 502 and 503 (DB1, DB2 and DB3) based on the SQL statement.

In Step S95, the window server apparatus 200 checks timestamps on data obtained from the data server apparatuses 501, 502 and 503 (DB1, DB2 and DB3). For example, the window server apparatus 200 obtains the first data shown in Figure 5(a) and the second data shown in Figure 5(b) from the data server apparatus 501 (DB1), the second data shown in Figure 5(b) and the third data shown in Figure 5(c) from the data server apparatus 502 (DB2) and the first data shown in Figure 5(a) and the third data shown in Figure 5(c) from the data server apparatus 503 (DB3), and checks the timestamps on the data.

If the timestamps do not match each other, in Step S96, the window server apparatus 200 provides an alert to the client apparatus 100.

If the timestamps match each other, in Step S97, the window server apparatus 200 reconstructs the character string as the original data by coupling the data obtained from the data server apparatuses 501, 502 and 503 (DB1, DB2 and DB3). For example, this processing involves decomposing the item 1(1) of the first data shown in Figure 5 back into divisional data portions, decomposing the item 1(2) of the second data back into divisional data portions, decomposing the item 1(3) of the third data back into divisional data portions, and coupling the decomposed divisional data portions to each other back into the original character data. The same processing is performed for the items 2 and 3.

While the present invention has been described with regard to the illustrated examples, the present invention is not limited to the examples. For example, while embodiments where each character code is divided into two or three portions have been described above as examples, each character code may be divided into a number of portions equal to or smaller than the number of code elements (the number of digits) of the character code.

### Reference Signs List

- 1, 2: data management system
- 100: client apparatus
- 200: window server apparatus
- 300: user basic information server apparatus
- 400: API information server apparatus
- 500: data server apparatus group
- 501, 502, 503: data server apparatus

## Claims

1. A data management system, comprising a client apparatus, a window server apparatus and a plurality of data server apparatuses,
**characterized in that** the client apparatus is configured to transform private information including a character string having at least one item into a character code according to UTF-8, UTF-16, JIS or SJIS,
the client apparatus is configured to divide the character code into at least two divisional character code portions,
the client apparatus is configured to transmit the divisional character code portions to the window server apparatus, and
the window server apparatus is configured to store first data, which is formed by a part of the divisional character code portions, in one data server apparatus of the plurality of data server apparatuses and store second data, which is formed by a part of the divisional character code portions that is different from the part forming the first data, in another data server apparatus of the plurality of data server apparatuses.

2. The data management system according to claim 1, wherein the client apparatus is configured to divide the character code into at least three divisional character code portions, and
the window server apparatus is configured to store first data, which is formed by a part of the divisional character code portions, and second data, which is formed by a part of the divisional character code portions that is different from the part forming the first data, and third data, which is formed by a part of the divisional character code portions that is different from the parts forming the first and second data, in two or more data server apparatuses of the plurality of data server apparatuses in an overlapping manner.

3. The data management system according to claim 1 or 2, wherein the client apparatus is configured to directly couple divisional character code portions of the same ordinal number from the head of character codes to each other in the order of the character strings as original data and then transmit the coupled divisional character code portions to the window server apparatus.

4. The data management system according to any one of claims 1 to 3, wherein the plurality of data server apparatuses are located at different geological locations.
